# EUROPEAN PATENT SPECIFICATION

(11) **EP 2 404 809 B1**
(45) Date of publication and mention of the grant of the patent: **01.05.2013**
(21) Application number: 10168425.6
(22) Date of filing: 05.07.2010
(51) Int. Cl.: B62D 21/02

(54) **Draw beam**
Zugstange
Poutre de traction

(43) Date of publication of application: 11.01.2012
(73) Proprietor: VBG Group AB (Publ), 462 28 Vänersborg (SE)
(72) Inventor: Johansson, Stefan, 468 33, Vargön (SE)
(74) Representative: Edlund, Fabian

(56) References cited:
- EP-A1- 1 932 690
- EP-A1- 2 108 567
- EP-A2- 1 710 149

## Description

### FIELD OF THE INVENTION

The present invention relates to a draw beam for mounting a coupling device. In particular, the present invention relates to such a draw beam intended for use on a heavy towing vehicle.

### BACKGROUND OF THE INVENTION

In heavy vehicles, such as trucks, it is today common to offer various kinds of towing arrangements, allowing a trailer to be connected to the vehicle. Such towing arrangements generally include a draw beam, arranged in the rear part of the towing vehicle, and a coupling device supported by the draw beam. The draw beam is typically a cross end member shaped as a U-beam and provided with end flanges that can be connected to the longitudinal main beams of the towing vehicle by means of suitable fasteners, such as bolts, screws, rivets or similar.

EP1710149 discloses an example of a prior art draw beam according to the preamble features of claim 1. As illustrated in Fig. 1, the draw beam in EP1710149 is a U-shaped rear cross member designed with a centre web 100 and flange strips 101,102 attached to longitudinal edges of the centre web 100 on both sides and fastening lugs 103,104,105 being provided on the face of the rear cross-member, with upper and lower fastening lugs103,104, respectively projecting from the two flange strips 101,102 and, on each side, a vertical fastening lug 105 that runs almost transversal to the upper and lower fastening lugs 103,104 projecting from the centre web 100 of the U-shaped section and with holes 106,107 being provided on the fastening lugs 103,104,105, of which the holes 107 situated in the upper and lower fastening lugs are respectively arranged in an upper and lower fastening plane 108,109, wherein the vertical fastening 105 lugs arranged on both side of the centre web 100 extend across the entire height of the centre web 100 and have two holes 106 that are respectively arranged in the upper and lower fastening plane 108,109 of the upper and lower fastening lugs 103,104.

The fastening lugs allow the draw beam to be firmly secured to the longitudinal main beams of the towing vehicle. In particular, the vertical fastening lugs add stability to the web of the draw beam, and reduce movement of the web that may be caused by the load transferred during towing of a trailer.

However, although the vertical fastening lugs may reduce the movement of the web and thus the stress in the draw beam, they also restrict the design options and make it more difficult to adapt the draw beam e.g. to fit various vertical offset positions in relation to the longitudinal main beams of the towing vehicle.

Thus, there is a need for an alternative more adaptable draw beam that may still efficiently stabilize the web.

### SUMMARY OF THE INVENTION

It is the main object of the present invention to overcome this problem, and to provide an alternative more adaptable draw beam that may still efficiently stabilize the web.

According to that aspect of the invention, this and other objects are achieved by a draw beam comprising a first and a second substantially parallel walls, and a web extending between the walls so as to form a U-beam, which U-beam extends between a first and a second ends,
wherein the first wall, at each of the first and second U-beam ends, is provided with an end flange which is substantially perpendicular to the first wall and is provided with fastening holes arranged in a first fastening plane substantially parallel with the first wall,
wherein the second wall, at each of the first and second U-beam ends, is provided with an end flange which is substantially perpendicular to the second wall and is provided with fastening holes arranged in a second fastening plane substantially parallel with the second wall,
wherein the web, at each of the first and second U-beam ends, is provided with an end flange which is substantially perpendicular to the web and is provided with fastening holes arranged in a third fastening plane substantially parallel with the web,
wherein each first wall end flange is arranged in such a way that one of its fastening holes is situated in the third fastening plane, and
each web end flange is arranged in such a way that one of its fastening holes is situated in the second fastening plane.

The arrangement allows the web to be efficiently stabilized to reduce stress in the draw beam, while additional design options are available for the end flanges, allowing the draw beam to be adapted fit to additional mounting positions.

All end flanges situated at the same U-beam end may preferably be non-overlapping.

Each first wall end flange may be directed outwards. An advantage with having the first wall end flange directed outwards is that the distance between the first and second walls (and thus the height of the web) can be reduced for a given distance between the first fastening plane and the second fastening plane. By reducing the height of the web, the strength of the construction can be increased.

Further, each first wall end flange may be separated from the web end flange arranged at its respective U-beam end. According to an embodiment, the separation between the first wall end flange and the web end flange is less than half the distance that separates the first and second walls, but sufficiently large so that the first wall end flange can be directed inwards without overlapping the web end flange. An advantage with selecting a separation in this range is that the web can be sufficiently stabilized while the first wall end flange can be directed either inwards or outwards without overlapping with the web end flange. Thus, the distance between the first wall fastening plane and the second wall fastening plane can be adapted during manufacturing of the draw beam by directing the first wall end flange either inwards or outwards. Thus, draw beams based on identically dimensioned U-beams can be adapted to fit with various mounting positions.

The web may be provided with a recess located in-between the web end flange and the first wall, the recess being configured to receive a lateral wall of a longitudinal main beam of a towing vehicle. This allows the first wall end flange and the web end flange to be placed on opposite side of the upper or lower lateral wall of the longitudinal main beam of the towing vehicle, thereby allowing further options when it comes to adjusting the vertical offset between the draw beam and the longitudinal frame member of the towing vehicle, and enabling the draw beam to be located in a position in which it can better handle the applied pulling forces and/or in a position that better suits the available space.

The web fastening holes may be interspaced at a predetermined distance. The predetermined distance may preferably be selected to be compatible with hole patterns that are provided in the longitudinal main beams of heavy vehicles.

A distance between the first wall fastening hole situated in the third fastening plane, and its nearest web fastening hole may preferably be a multiple of the predetermined distance between the web fastening holes. The multiple may preferably be one, two or three, but higher multiples may also be applicable.

Further, the second wall fastening holes may be interspaced at a predetermined distance.

A distance between the web fastening hole situated in the second fastening plane, and its nearest neighboring second wall fastening hole may preferably be a multiple of the predetermined distance between the second wall fastening holes. The multiple may preferably be one, two or three, but higher multiples may also be applicable.

It is noted that the invention relates to all possible combinations of features recited in the claims.

### BRIEF DESCRIPTION OF THE DRAWINGS

This and other aspects of the present invention will now be described in more detail, with reference to the appended drawings showing embodiment(s) of the invention.

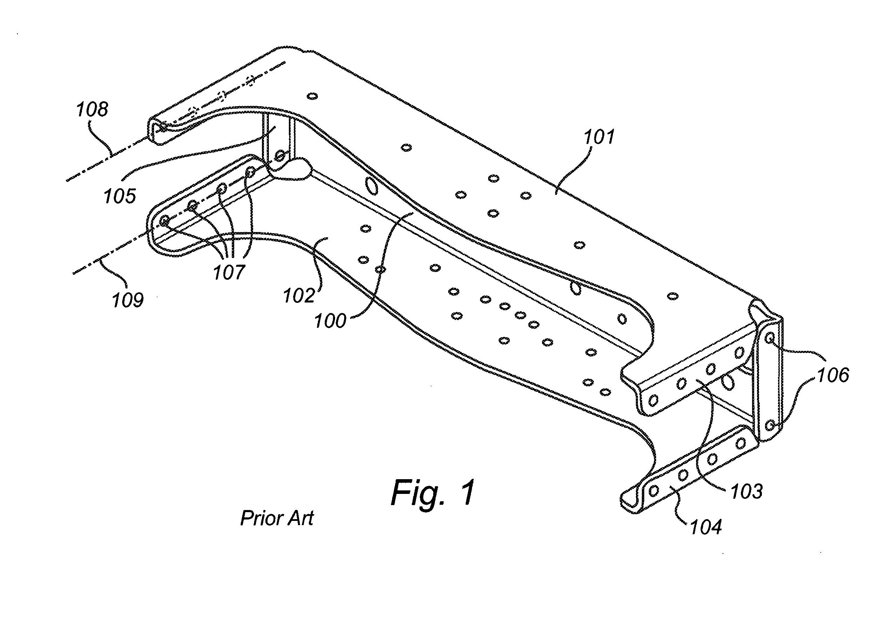

Fig. 1 is a schematic perspective view of a prior art draw beam;
Fig. 2 is a schematic perspective view of a towing vehicle equipped with a draw beam according to an embodiment of the present invention;
Fig. 3 is a schematic perspective view of a draw beam according to an embodiment of the present invention;
Fig. 4 is a schematic perspective view of a draw beam according to an alternative embodiment of the present invention;
Fig. 5 is a schematic perspective view of a draw beam according to yet another embodiment of the present invention; and
Figs. 6a-d are schematic perspective views illustrating how the draw beam in Fig. 3 can be mounted in various positions.

### DETAILED DESCRIPTION

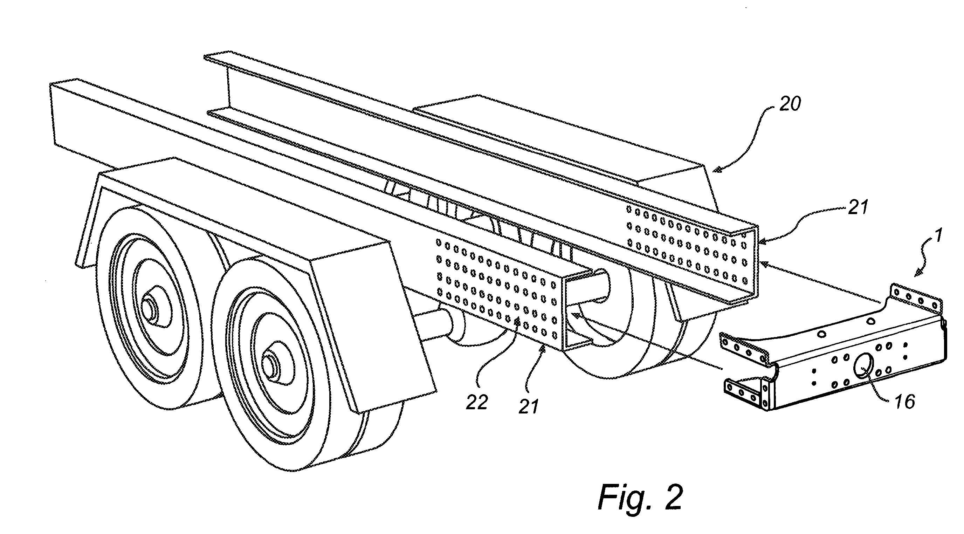

Fig. 2 is a perspective view of a heavy vehicle 20, such as a truck, provided with a draw beam 1 according to an embodiment of the invention. The draw beam 1 is here arranged between two longitudinal main beams 21 of the vehicle chassis in the rear part of the vehicle. The draw beam can be provided with a hole 16 and/or other suitable means for mounting a coupling device (not shown) to the draw beam, which coupling device enables connection to a trailer to be towed by the vehicle.

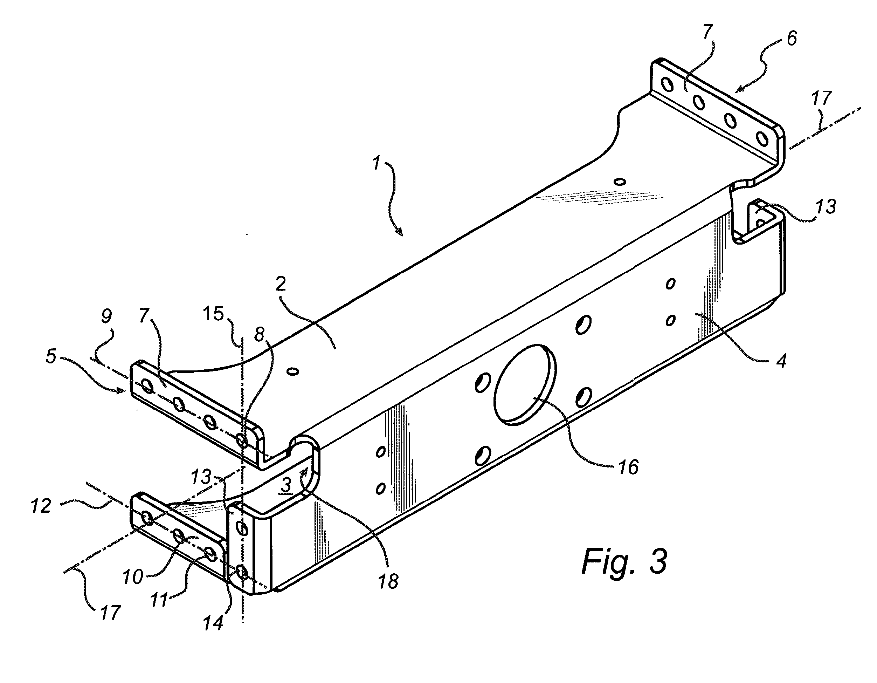

As illustrated in Fig. 3, the draw beam 1 comprises a first 2 and a second 3 substantially parallel walls, and a web 4 extending between the walls so as to form a U-beam which extends between a first 5 and a second 6 ends.

At each U-beam end 5, 6, an end portion of the first wall 2 is bent substantially 90° to form an end flange 7. Here the first wall end flange 7 is bent outwards (i.e. away from a longitudinal centre axis 17 of the U-beam) and is provided with fastening holes 8 arranged in a first fastening plane 9, which plane 9 is parallel with the first wall 2. The first wall fastening holes 8 are preferably interspaced with a predetermined distance so that the holes can be aligned with holes in a hole pattern 22 in the longitudinal main beams 21 of the towing vehicle 20. The first wall end flange 7 may preferably extend across substantially the whole width of the first wall 2 to allow for as many first wall fastening holes 8 as possible. Here there are four first wall fastening holes 8.

Further, at each U-beam end 5, 6, an end portion of the web 4 is bent substantially 90° to form an end flange 13. Here the web end flange 13 is bent inwards (i.e. towards the longitudinal centre axis 17 of the U-beam) and is provided with fastening holes 14 arranged in a third fastening plane 15, which plane 15 is parallel with the web 4. The web fastening holes 14 are preferably interspaced with a predetermined distance so that the holes can be aligned with holes in a hole pattern 22 in the longitudinal main beams 21 of the towing vehicle 20. Here the web end flange 13 is provided with two holes. The web end flange 13 starts at the second wall 3 and preferably extends over at least half the web to provide sufficient stabilization of the web. Although, the web end flange 13 may extend all the way to the first wall 2, it may often be preferably to design the web end flange 13 in such a way that it does not reach all the way to the first wall 2. This allows the plate that forms the web 4 to be cut in such a way that a longitudinal recess 18 is formed in the web 4 in-between web end flange 13 and the first wall 2. The shape and dimension of the recess may vary, but is preferably such that the recess may receive a lateral wall 23,24 of the longitudinal main beam 21 of a towing vehicle, as explained in more detail below.

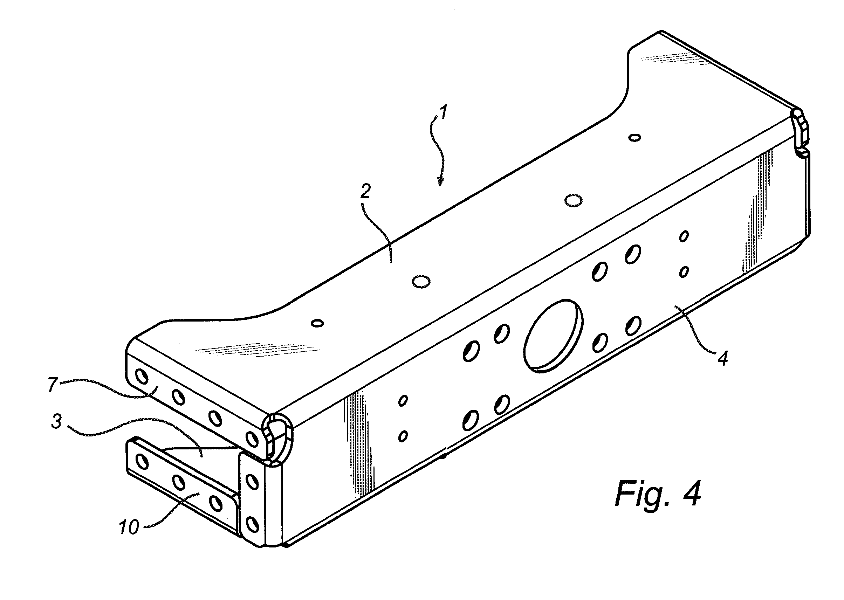

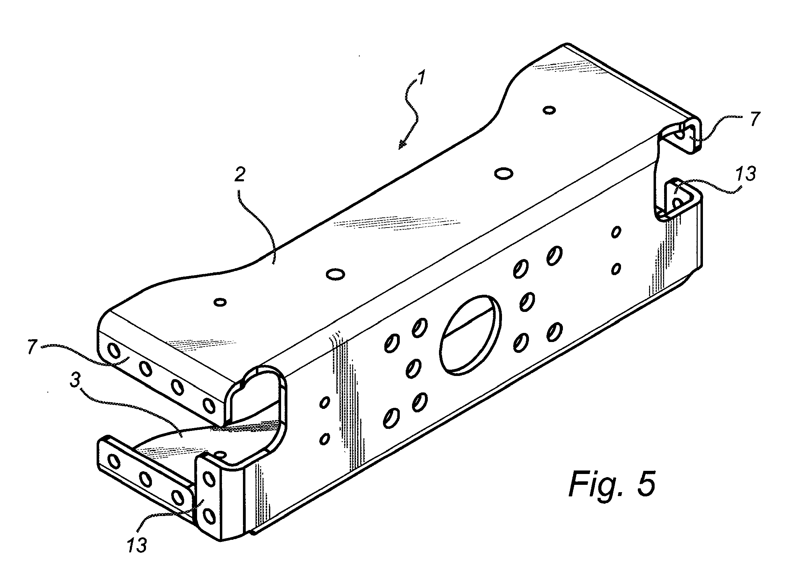

It is noted that it may be preferably to configure the web end flange 13 in such a way that the first wall end flange 7 can be directed inwards (i.e. towards the longitudinal centre axis 17 of the U-beam) without overlapping with the web end flange 13, as this allows the distance between the first fastening plane 9 and the second fastening plane 12 to be selected during manufacturing by directing the first wall end flange 7 inwards or outwards. This is illustrated by the draw beam in Fig. 4 which only differs from the draw beam in Fig. 3 in that the first wall end flange is directed inwards instead of outwards. Moreover, Fig. 5 illustrates how the separation between web end flange 13 and the first wall end flange 7 can be increased by increasing the height of the web (i.e. the separation between the first wall 2 and the second wall 3).

Once again referring to Fig. 3, at each U-beam end 5, 6, an end portion of the second wall 3 is bent substantially 90° to form an end flange 10. Here the second wall end flange 10 is bent inwards (i.e. towards the longitudinal centre axis 17 of the U-beam) and is provided with fastening holes 11 arranged in a second fastening plane 12, which plane 12 is parallel with the second wall. The second wall end flange 10 is preferably shaped to avoid overlapping with the adjacent web end flange 13, by reducing the width of the second wall end flange 10 so that it does not reach all the way to the web 4. Further, the second wall fastening holes 11 are typically interspaced with a predetermined distance so that the holes can be aligned with holes in a hole pattern 22 in the longitudinal main beams 21 of the towing vehicle 20. Here the second wall end flange 10 is provided with three holes.

As appears from Fig. 3, the first wall end flange 7 is arranged in such a way that one of its fastening holes 8 is situated in the third fastening plane 15. Moreover, the arrangement of the first wall end flange 7 is preferably such that a distance between the first wall fastening hole 8 situated in the third fastening plane 15, and its nearest web fastening hole 14 is a multiple of the predetermined distance between the web fastening holes 14 to be compatible with a typical hole pattern 22 in the longitudinal main beams 21 of towing vehicle 20. The multiple may vary, but for the draw beam in Fig. 3 the multiple is two, whereas for the draw beam in Fig. 4 the multiple is one.

Further, the web end flange 13 is arranged in such a way that one of its fastening holes 14 is situated in the second fastening plane 12. Moreover, the arrangement of the web end flange 13 is preferably such that a distance between the web fastening hole 14 situated in the second fastening plane 12, and its nearest neighboring second wall fastening hole 11 is a multiple of the predetermined distance between the web fastening holes 13 to be compatible with the hole pattern 22 in the longitudinal main beams 21 of the towing vehicle 20. The multiple is here one.

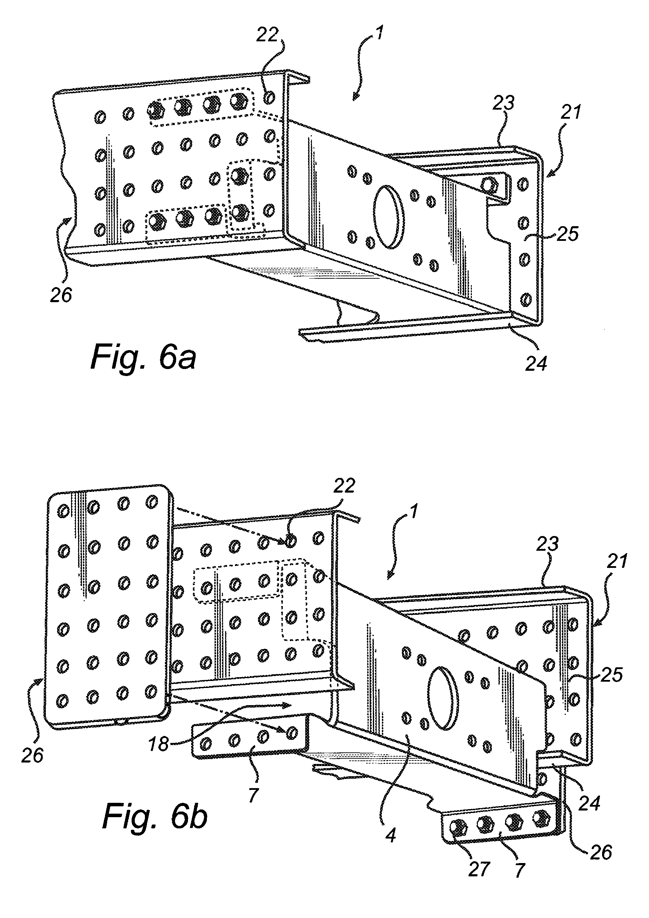

Fig. 6a illustrates how the draw beam 1 described in relation to Fig. 3, can be attached between the longitudinal main beams 21 of a towing vehicle. Each of the longitudinal main beams 21 is here shaped as a U-beam with an upper 23 and a lower 24 parallel lateral walls, and a web 25 extending between the lateral walls. Further, each of the longitudinal main beams 21 is provided with a hole pattern 22 for enabling attachment of the draw beam. The hole pattern is here simply a plurality of through-holes arranged in equally spaced rows and columns.

The draw beam 1 in Fig. 6a is positioned with each U-beam end 5,6, between the upper 23 and lower 24 walls of the respective longitudinal main beams 21 of the towing vehicle. The draw beam 1 is arranged in such a way that the through-holes 8,11,14 of the end flanges 7,10,13 are aligned with a selection of through-holes in the hole pattern 22 in the longitudinal main beam 21 so that the draw beam can be attached to the longitudinal main beams 21 by arranging rivets, bolts, screw or similar fasteners 27 in the aligned holes.

Fig. 6b, illustrates an alternative arrangement of the draw beam 1, where it is vertically offset relative the longitudinal frame members 21 of the towing vehicle. Here the first wall end flanges 7 of the draw beam 1 are located below the lower lateral walls 24 of the longitudinal main beams, whereas the second wall end flanges 10 of the draw beam are located above the lower walls 24 of the longitudinal main beams. It is noted that this is possible since the recess 18 in the web 4 of the draw beam 1 receives the lower lateral wall 24 of the longitudinal main beam. By using a side plate 26 with a suitable hole pattern on each side of the draw beam 1, each first wall end flange 7 can be attached to the respective side plate by rivets, bolts, screw or similar fasteners, which side plate in turn can be attached to the to the longitudinal main beams 21 of the vehicle by rivets, bolts, screw or similar fasteners. The second wall end flanges 10 and the web end flanges 13 are here directly attached to the longitudinal main beams 21 of the vehicle by rivets, bolts, screw or similar fasteners. Through the arrangement the draw beam 1 can be secured to the longitudinal main beams 21 of the vehicle.

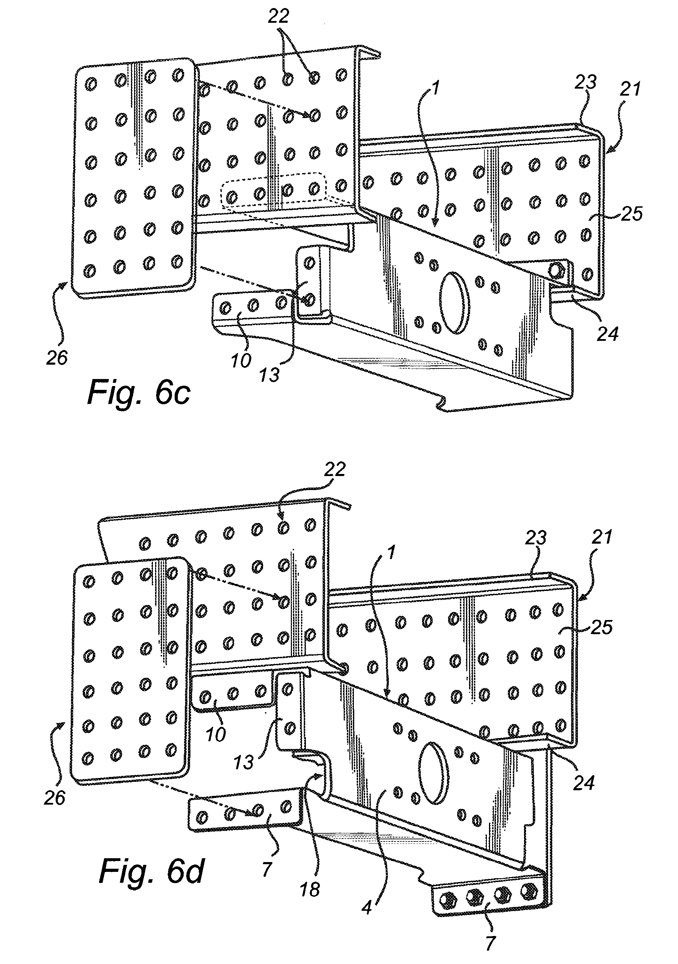

As illustrated in Fig. 6c, the vertical offset between the draw beam 1 and the longitudinal frame members 21 of the towing vehicle can be increased by arranging the draw beam in such a way that the second wall end flanges 10 of the draw beam 1 are located below the lower walls 24 of the longitudinal main beams, whereas the first wall end flanges 7 or the draw beam are located above the lower walls 24 of the longitudinal main beams.

As illustrated in Fig. 6d, the draw beam can also be mounted to the longitudinal frame member 21 of the towing vehicle by attaching both first wall end flanges 7 and second wall end flanges 10 to side plates 26 and attaching the side plates 26 to the longitudinal frame members 21 so that all of the draw beam 1 is located below the longitudinal frame members 21.

Of course, it is also possible to achieve a vertical offset upwards by arranging the draw beam 1 partly or completely above the longitudinal frame members 21.

Adjusting the vertical offset allows the draw beam to be located in a position in which it can better handle the applied pulling forces. It also allows the draw beam to be located in a position that better suits the space available.

The person skilled in the art realizes that the present invention by no means is limited to the preferred embodiments described above. On the contrary, many modifications and variations are possible within the scope of the appended claims. For example, the number of fastening holes in the end flanges may vary, but preferably, each end flange may have between two and six fastening holes. Furthermore, the hole pattern in the longitudinal main beams (and/or side plates) may vary. The distance between the holes may typically be 50 mm or 60 mm (both horizontally and vertically), or a multiple thereof. The predetermined distance between the fastening holes in each end flange may thus also be e.g. 50 mm or 60 mm, or a multiple thereof.

## Claims

1. A draw beam (1) comprising a first (2) and a second (3) substantially parallel walls, and a web (4) extending between the walls so as to form a U-beam, which U-beam extends between a first (5) and a second (6) ends,
wherein said first wall (2), at each of said first (5) and second (6) U-beam ends, is provided with an end flange (7) which is substantially perpendicular to said first wall (2) and is provided with fastening holes (8) arranged in a first fastening plane (9) substantially parallel with said first wall (2),
wherein said second wall (3), at each of said first (5) and second (6) U-beam ends, is provided with an end flange (10) which is substantially perpendicular to said second wall (3) and is provided with fastening holes (11) arranged in a second fastening plane (12) substantially parallel with said second wall (3),
wherein said web (4), at each of said first (5) and second (6) U-beam ends, is provided with an end flange (13) which is substantially perpendicular to said web (4) and is provided with fastening holes (14) arranged in a third fastening plane (15) substantially parallel with said web (4),
**characterized in that**
each first wall end flange (7) is arranged in such a way that one of its fastening holes (8) is situated in said third fastening plane (15), and
each web end flange (13) is arranged in such a way that one of its fastening holes (14) is situated in said second fastening plane (12).

2. The draw beam according to claim 1, wherein all end flanges (7,10,13) situated at the same U-beam end are non-overlapping.

3. The draw beam according to claim 1 or 2, wherein each first wall end flange (7) is directed outwards.

4. The draw beam according to any one of the preceding claims, wherein each first wall end flange (7) is separated from the web end flange (13) arranged at its respective U-beam end.

5. The draw beam according to claim 4, wherein said separation between the first wall end flange (7) and the web end flange (13) is less than half a distance that separates the first (2) and second (3) walls, but sufficiently large so that the first wall end flange can be directed inwards without overlapping the web end flange.

6. The draw beam according to any one of the preceding claims, wherein the web (4) is provided with a recess (18) located in-between said web end flange (13) and said first wall (2), said recess (18) being configured to receive a lateral wall (23,24) of a longitudinal main beam (21) of a towing vehicle.

7. The draw beam according to any one of the preceding claims, wherein the web fastening holes (14) are interspaced at a predetermined distance.

8. The draw beam according to claim 7, wherein a distance between the first wall fastening hole (8) situated in the third fastening plane (15), and its nearest web fastening hole (14) is a multiple of the predetermined distance between the web fastening holes (14).

9. The draw beam according to any one of the preceding claims, wherein the second wall fastening holes (11) are interspaced at a predetermined distance.

10. The draw beam according to claim 9, wherein a distance between the web fastening hole (14) situated in the second fastening plane (12), and its nearest neighboring second wall fastening hole (11) is a multiple of the predetermined distance between the second fastening holes (11).

## Patentansprüche

1. Zugstange (1), eine erste (2) und eine zweite (3), im Wesentlichen parallel liegende Wand und einen Steg (4) umfassend, der sich derart zwischen den Wänden erstreckt, dass eine U-Stange gebildet wird, wobei sich die U-Stange zwischen einem ersten (5) und einem zweiten (6) Ende erstreckt,
wobei die erste Wand (2) an jeweils dem ersten (5) und dem zweiten (6) U-Stangen-Ende mit einem Endflansch (7) ausgestattet ist, der im Wesentlichen rechtwinklig zur ersten Wand (2) liegt und mit Befestigungsöffnungen (8) ausgestattet ist, die in einer ersten Befestigungsebene (9) angeordnet sind, die im Wesentlichen parallel zur ersten Wand (2) liegt,
wobei die zweite Wand (3) an jeweils dem ersten (5) und dem zweiten (6) U-Stangen-Ende mit einem Endflansch (10) ausgestattet ist, der im Wesentlichen rechtwinklig zur zweiten Wandung (3) liegt und mit Befestigungsöffnungen (11) ausgestattet ist, die in einer zweiten Befestigungsebene (12) angeordnet sind, die im Wesentlichen parallel zur zweiten Wand (3) liegt,
wobei der Steg (4) an jeweils dem ersten (5) und dem zweiten (6) U-Stangen-Ende mit einem Endflansch (13) ausgestattet ist, der im Wesentlichen rechtwinklig zum Steg (4) liegt und mit Befestigungsöffnungen (14) ausgestattet ist, die in einer dritten Befestigungsebene (15) angeordnet sind, die im Wesentlichen parallel zum Steg (4) liegt,
**dadurch gekennzeichnet, dass**
jeder Endflansch der ersten Wand (7) derart angeordnet ist, dass eine seiner Befestigungsöffnungen (8) in der dritten Befestigungsebene (15) liegt, und
jeder Stegendflansch (8) derart angeordnet ist, dass eine seiner Befestigungsöffnungen (14) in der zweiten Befestigungsebene (12) liegt.

2. Zugstange nach Anspruch 1, wobei alle Endflansche (7, 10, 13), die am gleichen U-Stangen-Ende liegen, sich nicht überschneiden.

3. Zugstange nach Anspruch 1 oder 2, wobei jeder Endflansch der ersten Wand (7) nach außen gerichtet ist.

4. Zugstange nach einem der vorhergehenden Ansprüche, wobei jeder Endflansch der ersten Wand (7) vom Stegendflansch (13) getrennt ist, der an dessen entsprechendem U-Stangen-Ende angeordnet ist.

5. Zugstange nach Anspruch 4, wobei die Entfernung zwischen dem Endflansch der ersten Wand (7) und dem Stegendflansch (13) kleiner als die Hälfte eines Abstandes ist, der die erste (2) und die zweite (3) Wand trennt, aber ausreichend groß, damit der Endflansch der ersten Wand nach innen gerichtet sein kann, ohne sich mit dem Stegendflansch zu überschneiden.

6. Zugstange nach einem der vorhergehenden Ansprüche, wobei der Steg (4) mit einer Vertiefung (18) ausgestattet ist, die zwischen dem Stegendflansch (13) und der ersten Wand (2) angeordnet ist, wobei die Vertiefung (18) dafür gestaltet ist, eine Seitenwand (23, 24) eines Längsträgers (21) einer Zugmaschine aufzunehmen.

7. Zugstange nach einem der vorhergehenden Ansprüche, wobei die Stegbefestigungsöffnungen (14) mit einem vorbestimmten Abstand zueinander beabstandet sind.

8. Zugstange nach Anspruch 7, wobei ein Abstand zwischen der Befestigungsöffnung der ersten Wand (8), die in der dritten Befestigungsebene (15) liegt, und der ihr nächstgelegenen Stegbefestigungsöffnung (14) ein Mehrfaches des vorbestimmten Abstandes zwischen den Stegbefestigungsöffnungen (14) beträgt.

9. Zugstange nach einem der vorhergehenden Ansprüche, wobei die Befestigungsöffnungen der zweiten Wand (11) mit einem vorbestimmten Abstand zueinander beabstandet sind.

10. Zugstange nach Anspruch 9, wobei ein Abstand zwischen der Befestigungsöffnung (14), die in der zweiten Befestigungsebene (12) liegt, und der ihr nächstgelegenen benachbarten Befestigungsöffnung der zweiten Wand (11) ein Mehrfaches des vorbestimmten Abstandes zwischen den Befestigungsöffnungen der zweiten Wand (11) beträgt.

## Revendications

1. Poutre de traction (1) comprenant des première (2) et seconde (3) ailes essentiellement parallèles, et une âme (4) s'étendant entre les ailes de façon à former une poutre en U, laquelle poutre en U s'étend entre des première (5) et seconde (6) extrémités,
dans laquelle la première aile (2), sur chacune des première (5) et seconde (6) extrémités en U, est dotée d'une bride d'extrémité (7) qui est essentiellement perpendiculaire à la première aile (2) et est dotée de trous de fixation (8) agencés dans un premier plan de fixation (9) essentiellement parallèle avec la première aile (2),
dans laquelle la seconde aile (3), sur chacune des première (5) et seconde (6) extrémités en U, est dotée d'une bride d'extrémité (10) qui est essentiellement perpendiculaire à la seconde aile (3) et est dotée de trous de fixation (11) agencés dans un deuxième plan de fixation (12) essentiellement parallèle avec la seconde aile (3),
dans laquelle l'âme (4), sur chacune des première (5) et seconde (6) extrémités en U, est dotée d'une bride d'extrémité (13) qui est essentiellement perpendiculaire à l'âme (4) et est dotée de trous de fixation (14) agencés dans un troisième plan de fixation (15) essentiellement parallèle avec l'âme (4),
**caractérisé en ce que**
chaque bride d'extrémité de première aile (7) est agencée de telle manière que l'un de ses trous de fixation (8) est situé dans le troisième plan de fixation (15), et
chaque bride d'extrémité d'âme (13) est agencée de telle manière que l'un de ses trous de fixation (14) est situé dans le deuxième plan de fixation (12).

2. Poutre de traction selon la revendication 1, dans laquelle toutes les brides d'extrémité (7, 10, 13) situées sur la même extrémité de poutre en U ne se chevauchent pas.

3. Poutre de traction selon la revendication 1 ou 2, dans laquelle chaque bride d'extrémité de première aile (7) est dirigée vers l'extérieur.

4. Poutre de traction selon l'une quelconque des revendications précédentes, dans laquelle chaque bride d'extrémité de première aile (7) est séparée de la bride d'extrémité d'âme (13) agencée sur son extrémité de poutre en U respective.

5. Poutre de traction selon la revendication 4, dans laquelle la séparation entre la bride d'extrémité de première aile (7) et la bride d'extrémité d'âme (13) est inférieure à la moitié d'une distance qui sépare les première (2) et seconde (3) ailes mais suffisamment grande pour que la bride d'extrémité de première aile puisse être dirigée vers l'intérieur sans chevaucher la bride d'extrémité d'âme.

6. Poutre de traction selon l'une quelconque des revendications précédentes, dans laquelle l'âme (4) est dotée d'un évidement (18) situé entre la bride d'extrémité d'âme (13) et la première aile (2), l'évidement (18) étant configuré pour recevoir une aile latérale (23, 24) d'une poutre principale longitudinale (21) d'un véhicule de remorquage.

7. Poutre de traction selon l'une quelconque des revendications précédentes, dans laquelle les trous de fixation d'âme (14) sont interespacés à une distance prédéterminée.

8. Poutre de traction selon la revendication 7, dans laquelle une distance entre le trou de fixation (8) de la première aile situé dans le troisième plan de fixation (15) et son trou de fixation d'âme (14) le plus proche est un multiple de la distance prédéterminée entre les trous de fixation d'âme (14).

9. Poutre de traction selon l'une quelconque des revendications précédentes, dans laquelle les trous de fixation de seconde aile (11) sont interespacés à une distance prédéterminée.

10. Poutre de traction selon la revendication 9, dans laquelle une distance entre le trou de fixation d'âme (14) situé dans le deuxième plan de fixation (12) et son trou de fixation de seconde aile (11) voisin le plus proche, est un multiple de la distance prédéterminée entre les trous de fixation de seconde aile (11).
